# EUROPEAN PATENT APPLICATION

(11) **EP 1 742 103 A1**
(43) Date of publication of application: **10.01.2007**
(21) Application number: 06253237.9
(22) Date of filing: 22.06.2006
(51) Int. Cl.: G03B 17/12

(54) **Front frame of an image photographing apparatus and a method of manufacturing the same**

(30) Priority: 08.07.2005 KR 2005061862
(71) Applicant: Samsung Electronics Co., Ltd., Suwon-si, Gyeonggi-Do (KR)
(72) Inventor: Ahn, Kyoung-jin, 504-303, Sinnamusil Jugong Apt.,, Suwon-si, Gyeonggi-do (KR)
(74) Representative: Davies, Robert Ean

(57) **Abstract**

A front frame of an image photographing apparatus integrally comprises a filter mounting piece (110) with a threaded fastening part at its inner diameter, and an opening (120) for exposing a remote control receiver. A circumferential surface (210) of the filter mounting piece and a periphery of the opening are plated so that the number of parts required to manufacture the front frame can be reduced, which reduces manufacturing costs and allows the image photographing apparatus to be made smaller.

## Description

The present invention relates to an image photographing apparatus. More particularly, the present invention relates to a front frame of an image photographing apparatus and a method of manufacturing the same.

Generally, an image photographing apparatus is an apparatus for photographing moving images and still images. Typically, an image photographing apparatus has a front frame, and the front frame has a filter mounting piece for attaching a lens assembly and a window for allowing infrared sensor signals (such as remote control signals) to pass through the front frame.

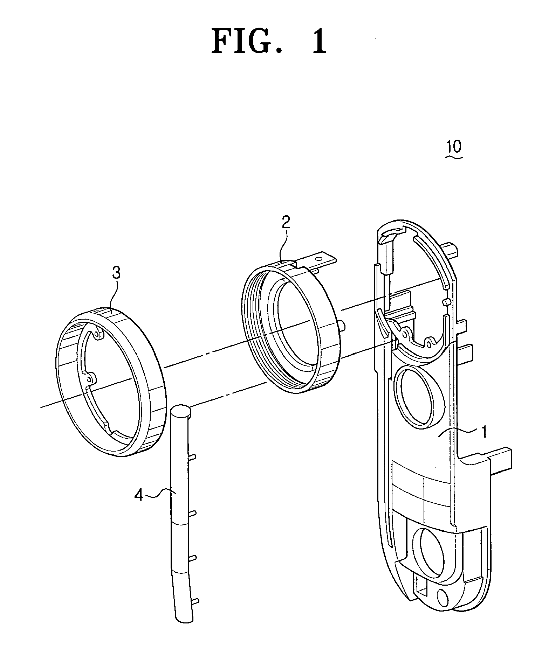

FIG. 1 shows an example of a front frame 10 of a conventional image photographing apparatus.

The front frame 10 includes a frame body 1, a filter mounting piece 2, a plated part 3, and a decorative member 4.

The frame body 1 is injection-molded, and the filter mounting piece 2 is coupled to the frame body 1. The filter mounting piece 2 is assembled to a separate accessory filter (not shown) with a fastener, such as a screw. The plated part 3 is assembled so that it wraps around the outer, circumferential surface of the filter mounting piece 2 to improve the appearance of the product. The decorative member 4 is typically plated, and is also assembled to the frame body 1.

As described above, the front frame 10 consists of four parts, and therefore, requires a significant number of assembly processes. Furthermore, it is difficult to reduce the size of the front frame due to the number of pieces.

Accordingly, there is a need for an improved front frame for an image photographing apparatus with a reduced number of parts and a reduced number of assembly steps, which can be used in a compact image forming apparatus.

An aim of embodiments of the present invention is to address at least the above problems and/or disadvantages and to provide at least the advantages described below. Accordingly, an aim of embodiments of the present invention is to provide a front frame for an image photographing apparatus, and a method of manufacturing the same, in which the number of parts is reduced and in which the front frame has a compact size.

In accordance with an aspect of the present invention, a front frame of an image photographing apparatus comprises an integral frame body comprising a filter mounting piece that has a threaded fastening part formed at its inner diameter, and an opening for exposing a remote control receiver. The filter mounting piece has an outer circumferential surface, and the opening has a periphery. The outer circumferential surface of the filter mounting piece and the periphery of the opening are plated.

The front frame may comprise a frame body formed of a PC resin.

The circumferential surface of the filter mounting pieces and the periphery of the opening may be formed of an ABS resin.

In accordance with another aspect of the present invention, a method of manufacturing a front frame of an image photographing apparatus comprises the steps of forming a frame body having a filter mounting piece and an opening for exposing a remote control receiver with a PC resin; forming a circumferential surface of the filter mounting piece and a periphery of the opening with an ABS resin; and plating the part formed of an ABS resin.

The step of forming a periphery of the filter mounting piece and a circumferential surface of the opening with an ABS resin may further comprise the step of forming a resin connecting part for connecting the circumferential surface of the filter mounting piece and the periphery of the opening.

The step of forming a circumferential surface of the filter mounting piece and a periphery of the opening with an ABS resin may further comprise a step of forming a power connecting part for connecting the circumferential surface of the filter mounting piece and the periphery of the opening with a power source.

The step of forming a periphery of the filter mounting piece and a circumferential surface of the opening with an ABS resin may further comprise a step of forming a gate outside the frame body and injecting ABS resin into the gate.

The gate may be connected to the frame body by a runner.

The step of plating the ABS resin may comprise a step of connecting a power supply to the power connecting part.

The step of plating the ABS resin may further comprise a step of dipping the frame body into a plating solution by using the runner as a plating hanger.

For a better understanding of the invention, and to show how embodiments of the same may be carried into effect, reference will now be made, by way of example, to the accompanying diagrammatic drawings in which:
FIG. 1 is an exploded perspective view of a front frame of a conventional image photographing apparatus;
FIG. 2 is a perspective view of a front frame of an image photographing apparatus according to an exemplary embodiment of the present invention;
FIG. 3 is a plan view of a front frame of an image photographing apparatus according to an exemplary embodiment of the present invention, during manufacturing; and
FIG. 4 is a flowchart of a method of manufacturing a front frame of an image photographing apparatus according to an exemplary embodiment of the present invention.

Throughout the drawings, the same reference numerals will be understood to refer to the same elements, features, and structures.

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

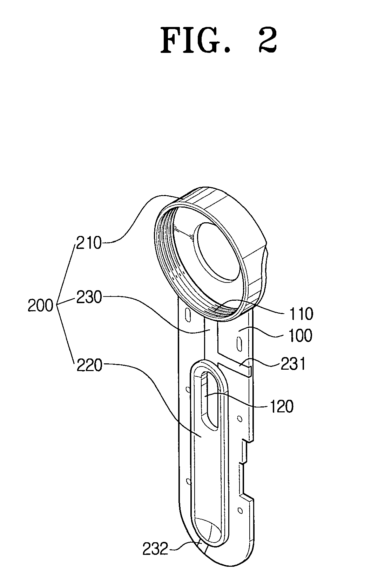

An exemplary embodiment of the present invention will now be described in detail with reference to the accompanying drawing figures. FIG. 2 is a perspective view of a front frame of an image photographing apparatus according to an exemplary embodiment of the present invention.
The front frame includes a frame body 100 and a plated part 200.
The frame body 100 is integrally formed with a filter mounting piece 110 having a threaded fastening part for mounting a filter, and an opening 120 for exposing a remote control receiver or the like.

The frame body is formed with, for example, a polycarbonate (PC) resin.

Referring to FIG. 2, the plated part 200 is formed of, for example, an acrylonitrile butadiene styrene (ABS) resin. The plated part 200 is provided on the outer circumferential surface of the filter mounting piece 110 and a periphery of the opening 120. The plated part improves the exterior appearance of the image photographing apparatus.

The plated part 200 includes a resin connecting part 230, and first and second power connecting parts 231, 232, a detailed explanation of which will be given below.

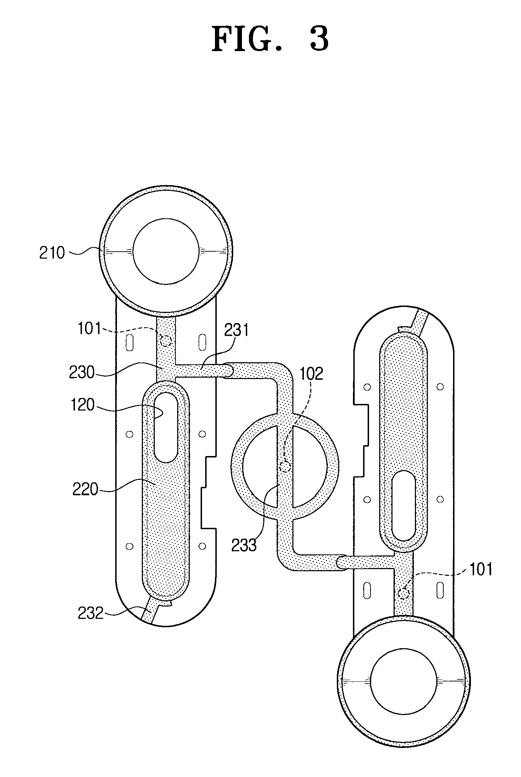

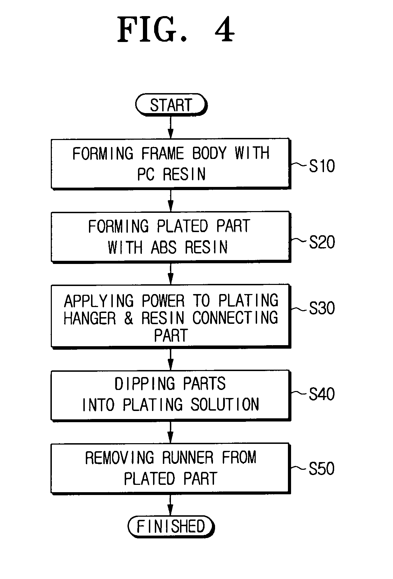

The method of manufacturing a front frame of an image photographing apparatus according to an exemplary embodiment of the present invention will now be described, with reference to FIGS. 3 and 4.

Initially, the frame body 100 is formed by injecting PC resin through a first gate 101 (Step S 10).

ABS resin is then injected molded around the frame body 100 to form the circumferential surface 210 of the filter mounting piece 110 and the peripheral portion 220 of the opening 120. The frame body 100 has a second gate 102 on its exterior surface for the injection of the ABS resin.

Referring now to FIG. 3, after the above steps are performed, the frame has a runner 233 having a predetermined shape.

The runner 233 is used as a plating hanger when the ABS resin is plated.

If the second gate 102 is disposed outside the frame body 100, the circumferential surface 210 of the filter mounting piece 110 and the periphery 220 of the opening 120 can be simultaneously formed via the resin connecting part 230 (Step S20).

After the ABS resin is injected, one end of a power supply (not shown) is connected to the runner 233, which functions as a plating hanger for electroplating, and supplies power to the first power connecting part 231. The power supply is also connected to the second power connecting part 232 (Step S30).

Power is applied to the frame body 100 and the frame body 100 is dipped into a plating tank filled with a plating solution so that the circumferential surface 210 of the filter mounting piece 110 and the periphery 220 of the opening 120 are plated.

At this time, the circumferential surface 210 of the filter mounting piece 110 and the periphery 220 of the opening 120 are electrically connected via the resin connecting part 230 to thereby enable both parts to be plated at the same time (Step S40).

The runner 233 is then removed from the finished, plated parts (Step S50). After the runner 233 is removed, an external case printed with a product logo can be attached to the frame body 100, or the front frame can be further finished by processes such as painting.

As described above, the filter mounting piece having a threaded fastening part is integrally formed with a front frame and is manufactured as one part. Accordingly, the number of parts is reduced, and the cost of manufacturing the front frame is decreased.

Furthermore, there is no need to assemble separate parts, and the number of assembly processes is reduced. Finally, making the front frame of a single piece allows the product to be more compact, and reduces the total number of parts. As a result, manufacturing costs can be lowered, manufacturing processes can be simplified and assembly efficiency can be further improved.

While the invention has been shown and described with reference to certain exemplary embodiments thereof, it will be understood by those skilled in the art that various changes in form and details may be made therein without departing from the spirit and scope of the invention as defined by the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A front frame of an image photographing apparatus integrally comprising:
a filter mounting piece (110) comprising a threaded fastening part at an inner diameter and an outer circumferential surface; and
an opening (120) for exposing a remote control receiver, the opening comprising a periphery,
wherein the circumferential surface of the filter mounting piece (110) and the periphery of the opening (120) are plated.

2. The front frame as claimed in claim 1, wherein
the front frame comprises a frame body (100) comprising a PC resin.

3. The front frame as claimed in claim 1 or 2, wherein
the circumferential surface of the filter mounting piece (110) and the periphery of the opening (120) comprise an ABS resin.

4. A method of manufacturing a front frame of an image photographing apparatus, comprising the steps of:
a) forming (S10) a frame body comprising a filter mounting piece (110) and an opening (120) for exposing a remote control receiver by a PC resin;
b) forming (S20) a circumferential surface of the filter mounting piece and a periphery of the opening with an ABS resin; and
c) plating (S40) the circumferential surface of the filter mounting piece and the periphery of the opening.

5. The method as claimed in claim 4, wherein
the step b) comprises the step of forming a resin connecting part (230) for connecting the circumferential surface of the filter mounting piece and the periphery of the opening.

6. The method as claimed in claim 5, wherein
the step b) further comprises a step of forming a power connecting part (231, 232) for connecting the circumferential surface of the filter mounting piece and the periphery of the opening with a power source.

7. The method as claimed in claim 6, wherein
the step b) further comprises a step of forming a gate (102) outside the frame body and injecting ABS resin into the gate.

8. The method as claimed in claim 7, wherein
the gate (102) is connected to the frame body by a runner (233).

9. The method as claimed in claim 8, wherein
the step c) comprises a step of connecting (530) a power supply to the power connecting part.

10. The method as claimed in claim 8 or 9, further comprising the step of:
Dipping (S40) the frame body into a plating solution by using the runner (233) as a plating hanger.

11. A front frame of an image photographing apparatus comprising:
a frame body (100) comprising a filter mounting piece (110) and an opening (120) for allowing control signals to pass through; and
a plated part (200) which is integral with the frame body (100), the plated part comprising an outer circumferential surface (210) of the filter mounting piece and a periphery of the opening.

12. The front frame as claimed in claim 11, wherein
the frame body comprises a PC resin.

13. The front frame as claimed in claim 12, wherein
the plated part comprises an ABS resin.

14. The front frame as claimed in any of claims 11-13, wherein
the plated part further comprises a resin connector part (230) connecting the outer circumferential surface of the filter mounting piece and the periphery of the opening.

15. The front frame as claimed in claim 14, further comprising
a first power connecting part (231) for connecting the plated part to a power source.

16. The front frame as claimed in claim 15, further comprising
a second power connecting part (232) for connecting the plated part to a power source.

17. The front frame as claimed in any of claims 11-16, further comprising
a runner (233) connecting the plated part to a gate.
